# EUROPÄISCHE PATENTSCHRIFT

(11) **EP 0 740 973 B1**
(45) Veröffentlichungstag und Bekanntmachung des Hinweises auf die Patenterteilung: **19.07.2000**
(21) Anmeldenummer: 96106251.0
(22) Anmeldetag: 20.04.1996
(51) Int. Cl.: B23B 5/14, B23D 21/04

(54) **Rohrabstechmaschine und Verfahren zum Abstechen von Rohrstücken von einem Rohr**
Pipe cutting-off machine and process of cut-off of tubular pieces from a pipe
Machine a décolleter les tubes et procédé de tronçonnage de pièces tubulaires à partir de tube

(30) Priorität: 04.05.1995 DE 19516035; 04.04.1996 DE 19613500
(43) Veröffentlichungstag der Anmeldung: 06.11.1996
(73) Patentinhaber: MASCHINENFABRIK REIKA-WERK GmbH, D-58099 Hagen (DE)
(72) Erfinder: Braun, Hans-Jörg, 58093 Hagen-Berchum (DE); Mohn, Gerhard, 51702 Bergneustadt (DE)
(74) Vertreter: Rehders, Jochen, Dipl.-Ing.

(56) Entgegenhaltungen:
- EP-A- 0 425 994
- EP-A- 0 645 208

## Beschreibung

Die Erfindung betrifft eine Rohrabstechmaschine und ein Verfahren zum Abstechen von Rohrstücken von einem Rohr, insbesondere zum Abstechen von Kugellagerringen von dickwandigen Rohren.

Rohrabstechmaschinen dieser Art weisen einen Abstechkopf mit Spannbacken zum Außenspannen eines Rohrendes, eine drehbare Planscheibe zur Aufnahme von wenigstens einem radial zustellbaren Abstechwerkzeug und ggf. wenigstens einem radial zustellbaren Faswerkzeug sowie häufig einen Abgreifer zum Ergreifen und Ablegen eines abgestochenen Rohrstücks auf. Eine derartige Rohrabstechmaschine ist in dem europäischen Patent Nr. 0 425 994 derselben Anmelderin beschrieben.

Bei dieser Rohrabstechmaschine wird das abzustechende Rohr auf fluchtend zum Abstechkopf angeordnete Stützrollen abgelegt, von denen mindestens eine angetrieben ist. Durch den Antrieb dieser Stützrolle wird das Rohr durch den Abstechkopf und die Planscheibe hindurch bis gegen einen einstellbaren Anschlag transportiert und dann mittels der Spannbacken eingespannt, wonach der Abstechvorgang durchgeführt wird. Der Anschlag muß sehr kräftig ausgeführt sein, da der Anschlag nicht nur das Rohrende positionieren, sondern auch den Vorschub des Rohres anhalten muß, wobei insbesondere bei dickwandigen Rohren mit ihrer großen Masse erhebliche Kräfte auftreten. Nach dem Einspannen des Rohres muß der Anschlag aus dem Bereich des Rohrendes wegbewegt werden, um das abzustechende Rohrstück mittels eines Abgreifers greifen und ablegen zu können. Da sich dieser Vorgang bei jedem Vorschubschritt wiederholt, ergeben sich Totzeiten für die Maschine, die die Ausbringung an abgestochenen Rohrstücken verringert. Des weiteren können Ungenauigkeiten bei der Breite des abgestochenen Rohrstücks auftreten, wenn sich z. B. ein Span zwischen dem Anschlag und der Rohrstirnseite festsetzt.

Der Vorschub mittels einer angetriebenen Stützrolle ist zwar baulich verhältnismäßig einfach, gestattet es jedoch nicht, den Vorschub auf einen genauen Wert einzustellen, vielmehr muß das Rohr mit der Stirnseite jedesmal gegen den Anschlag gefahren werden. Aufgrund des Freiflächenverschleißes an dem Abstechwerkzeug ergibt sich allmählich eine Verbreiterung der abgestochenen Rohrstücke, die sich nur korrigieren läßt, wenn für den Anschlag eine entsprechende Einstellmöglichkeit, vorzugsweise über eine zusätzliche CNC-Achse geschaffen wird.

Um sicher zu sein, daß die Rohrstirnseite satt am Anschlag anliegt, muß der Rohrvorschub über den Stützrollenantrieb so beschaffen sein, daß im Moment des Anschlags noch eine Antriebskraft wirkt, die ein Durchrutschen der angetriebenen Stützrolle zur Folge hat, womit ein hoher Rollenverschleiß verbunden ist.

Schließlich ist mit dem bekannten Antrieb ein hoher Verlust an nicht weiterverarbeitbaren Rohrstücken verbunden, da die Stützrolle notwendigerweise vor dem Eingang in den Abstechkopf angeordnet sein muß und ein weiterer Vorschub nicht mehr möglich ist, wenn das Rohrstück nicht mehr auf der angetriebenen Stützrolle aufliegt. Dieser Rohrrest läßt sich auch nicht weiterverarbeiten, indem ein neues Rohr dazu verwendet wird, das Reststück durch den Abstechkopf zu verschieben, da dieses Reststück nur noch durch die Spannbacken im Abstechkopf gehalten wird, die in Bezug auf die Länge des Reststücks eine verhältnismäßig geringe axiale Erstreckung aufweisen und daher nicht in der Lage sind, das Reststück genau horizontal auszurichten. Vielmehr verkantet sich das Reststück, sobald es nicht mehr von einer Stützrolle unterstützt wird, und es ergeben sich beim weiteren Abstechen schiefe Rohrstücke.

Bei Kugellagerringen handelt es sich um ausgesprochene Massenerzeugnisse, die möglichst vollautomatisch mit größter Maschinenausnutzung und möglichst geringen Zerspanungsverlusten bei den teuren, hochlegierten Rohrstählen und mit möglichst geringem Verschleiß der teuren Werkzeuge abgestochen werden sollen. Geringe Zerspanungsverluste ergeben sich zwar beim Absägen der Kugellagerringe mittels Bandsägen, da hierbei die Schnittbreite höchstens 2 mm beträgt. Die Schnittgeschwindigkeit von Sägen ist indessen nicht hoch und die Standzeiten der Sägebänder sind niedrig, da eine Bandsäge grundsätzlich nur quer durch ein Rohr hindurchsägen kann und dabei auf dem ganzen Weg auf die harten Zonen im Bereich des Außendurchmessers und des Innendurchmessers trifft. Hinzu kommt, daß der Schnittverlauf nicht genau senkrecht zur Rohrachse liegen kann, da das elastische, im Bereich des Rohres ungeführte Band ausweichen kann, so daß ein Planen der abgestochenen Kugellagerringe als zusätzlicher Arbeitsgang stets erforderlich ist.

Der Erfindung liegt das Problem zugrunde, ein Verfahren zum Abstechen von Rohrstücken von einem Rohr mit einer harten Zone wenigstens im Bereich des Außendurchmessers, insbesondere zum Abstechen von Kugellagerringen von dickwandigen Rohren sowie eine Rohrabstechmaschine zu schaffen, mit denen sich Rohrstücke mit hoher Maschinenausnutzung, geringer Zerspanung sowie ggf. ohne Verwendung eines Anschlags maßgenau, schnell und genau rechtwinklig zur Rohrachse mit geringem Werkzeugverschleiß abstechen lassen.

Ausgehend von dieser Problemstellung wird ein Verfahren mit folgenden Schritten vorgeschlagen:
- Messen des Ist-Außendurchmessers des Rohres im Bereich der Abstechstelle am Rohr oder Eingeben des Nenn-Außendurchmessers des Rohres,
- Heranfahren eines Abstechwerkzeugs an die Außenoberfläche des Rohres im Eilgang,
- Umschalten des Vorschubs und/oder der Schnittgeschwindigkeit auf einen niedrigen Wert zum Durchstechen der harten Zone,
- Umschalten des Vorschubs und/oder der Schnittgeschwindigkeit auf einen dem Rohrmaterial angepaßten Arbeitsgang zum schnellen Abstechen eines Ringes.

Durch das Abstechen anstelle Absägen der Ringe läßt sich die Zerspanungsgeschwindigkeit ganz erheblich erhöhen, und es wird bei jedem Abstechen eine vollständig plane, genau rechtwinklig zur Rohrachse verlaufende Ringfläche geschaffen, die im Gegensatz zum Absägen keinerlei nachträgliches Planen erfordert. Das Abstechen läßt sich mit einem Werkzeug durchführen, das nicht breiter zu sein braucht als ein Sägeband, so daß gegenüber herkömmlichen Abstechverfahren weniger des teuren Materials zerspant wird.

Diese harte Zone läßt sich genau und ohne Verlaufen des Abstechwerkzeugs und ohne besonderen Verschleiß des Abstechwerkzeugs durchstechen, so daß die Kosten durch Werkzeugverschleiß erheblich herabgesetzt werden. Wenn nämlich die harte Zone mit geringem Vorschub und/oder geringer Schnittgeschwindigkeit durchstochen wird, erhöht sich damit die Standzeit des Abstechwerkzeugs, so daß sich das Abstechwerkzeug schmaler ausführen läßt und daher weniger teurer Werkstoff zerspant wird. Zwar muß der Abstechstahlhalter wegen der großen Wanddicke der Rohre eine große Kraglänge des schmalen, die Schneidplatte tragenden Bereichs aufweisen, der naturgemäß eine geringe Steifigkeit in Richtung der Rohrachse aufweist, jedoch läßt sich ein Auswandern durch das langsame Durchstechen der harten Zone vermeiden.

Das langsame Durchstechen der harten Zone dient somit nicht nur zur Herabsetzung des Verschleiß des Abstechwerkzeugs sondern auch dazu, einen genauen, nicht verlaufenden Ansatzpunkt für den Abstechvorgang zu erreichen.

Bei diesen harten Zonen der zu bearbeitenden Rohre kann es sich um eine harte Walzhaut, eine harte Gußhaut oder auch um eine sich aus der Legierungzusammensetzung und der Abkühlgeschwindigkeit der dickwandigen Rohre nach dem Walzen mit Bildung einer harten Schicht entweder nur im Bereich des Außendurchmessers oder auch im Bereich des Innendurchmessers handeln.

Gemäß einer Weiterbildung des erfindungsgemäßen Verfahrens kann daher das Umschalten des Vorschubs und/oder der Schnittgeschwindigkeit auf einen niedrigeren Wert auch bei Annäherung an den Innendurchmessers erfolgen, um den Verschleiß in diesem Bereich zu vermindern und zusätzlich beim vollständigem Abstechen des Rohrstücks eine verminderte Gratbildung und ein vollständiges Abtrennen eines dünnen und sauberen Ringspans zu erreichen.

Um die Nebenzeiten auf ein Minimum herabzusetzen, kann des weiteren ein Messen der Schnittkraft während des Abstechens vorgenommen werden, um das abgestochene Rohrstück mittels einer Abgreifvorrichtung abzuführen, sobald die Schnittkraft unter einen vorgebbaren Wert abfällt.

Um des weiteren in Weiterbildung des erfindungsgemäßen Verfahrens Rohrstücke ohne Verwendung eines Anschlags maßgenau und genau rechtwinklig zur Rohrachse abstechen zu können, wird ein Verfahren mit folgenden Schritten vorgeschlagen:
- Einlegen eines Rohres in eine Rohrabstechmaschine,
- Ergreifen des Rohres durch eine schlupffreie Vorschubeinheit,
- Vorfahren des Rohres mittels der Vorschubeinheit,
- Erfassen des Durchgangs des Rohrendes vor dem Einschieben in einen Abstechkopf mit Spannbacken mittels einer Tasteinheit,
- CNC-gesteuertes Vorfahren des Rohres durch den Abstechkopf über eine einstellbare Strecke und Spannen der Spannbacken,
- Abstechen oder Planbearbeiten der aus dem Abstechkopf herausragenden Rohrstirnseite zum Festlegen eines definierten Rohranfangs,
- CNC-gesteuertes Vorfahren des Rohres um eine eingegebene Breite des abzustechenden Rohrstücks einschließlich der Schnittbreite ausgehend vom definierten Rohranfang,
- Abstechen und ggf. Anfasen des Rohrstücks mit umschaltbarer Vorschub- und/oder Schnittgeschwindigkeit,
- Wiederholen des Vorfahrens und Abstechens.

Dieses Verfahren geht von der Überlegung aus, daß sich auf einen Anschlag verzichten läßt und sich die damit verbundenen Nachteile vermeiden lassen, wenn das im Abstechkopf eingespannte Rohrende hinsichtlich seiner Lage erfaßt wird und die schlupffrei arbeitende Vorschubeinheit anschließend so angesteuert wird, daß sie das Rohr für den Abstechvorgang um genau die Breite des abzustechenden Rohrstücks zuzüglich der Breite des Abstechwerkzeugs durch den Abstechkopf transportiert, wonach das Rohr wieder eingespannt und ein Rohrstück mit der vorgegebenen Breite abgestochen wird.

Bei diesem Verfahren ist insbesonders bemerkenswert, daß beim Einlegen und Vorfahren eines neuen Rohres ein definierter Rohranfang festgelegt wird, indem die Rohrstirnseite einem kurzen Planbearbeitungsgang unterzogen wird. Hierdurch werden Unsauberkeiten an der Rohrstirnseite, wie nicht gerade oder nicht rechtwinklig zur Rohrachse verlaufende Stirnflächen egalisiert und eine Bezugsebene geschaffen, die als Ausgangspunkt für den CNC-gesteuerten Vorschub um der Breite des abzustechenden Rohrstücks entsprechende Wege dient.

Die Abnutzung des zum Planbearbeiten der Rohrstirnseite und zum Abstechen der Rohrstücke verwendeten Werkzeugs läßt sich durch die Vorschubsteuerung ohne weiteres berücksichtigen. Dies kann entweder dadurch geschehen, daß die Breite der abgestochenen Rohrstücke gemessen wird und der Vorschub korrigiert wird, wenn in die Steuereinheit ein aus Erfahrungswerten resultierender Korrekturwert eingegeben wird, der eine automatische Anpassung des Vorschubs bewirkt.

Um ein möglichst kurzes Reststück des Rohres zu erhalten, ist es vorteilhaft, das Rohr mittels einer am Rohrende eingreifenden Vorschubeinheit mit Spannbacken zum Innenspannen so lange stufenweise vorzufahren, bis nur noch ein Reststück entsprechend der erforderlichen Spannlänge im Abstechkopf verbleibt, das Reststück mittels der Vorschubeinheit aus dem Abstechkopf zurückzuziehen und das zurückgezogene Rohrstück abzustreifen.

Um zu vermeiden, daß das Abstechwerkzeug beim Zurückfahren nach dem Abstechen durch die Rohrstirnfläche beschädigt wird und Spiralriefen auf dieser Oberfläche erzeugt, kann das Rohr vorteilhafterweise nach dem Abstechen und ggf. Anfasen des Rohrstücks und nach dem Öffnen der Spannbacken des Abstechkopfes mittels der Vorschubeinheit ein kurzes Wegstück zurückgezogen werden, das Abstechwerkzeug und ggf. das Anfaswerkzeug, ohne die Rohrstirnfläche zu berühren, zurückgezogen werden und der Vorschubweg zum Abstechen und ggf. Anfasen eines weiteren Rohrstücks um das Wegstück beim Zurückziehen vergrößert werden.

Da sich die Rohrmasse mit jedem Abstechvorgang verringert, ist es vorteilhaft, die Beschleunigung und die Geschwindigkeit des Rohrvorschubs in Abhängigkeit von der noch vorhandenen Rohrmasse im Sinne einer Erhöhung bei abnehmender Rohrmasse zu steuern.

Zur Lösung der eingangs definierten Problemstellung wird des weiteren eine Rohrabstechmaschine mit einem Abstechkopf mit Spannbacken zum Außenspannen eines Rohrendes, einer drehbaren Planscheibe zur Aufnahme von wenigstens einem radial zustellbaren Abstechwerkzeug zum Abstechen mit umschaltbarer Vorschub- und/oder Schnittgeschwindigkeit und ggf. wenigstens einem radial zustellbaren Faswerkzeug und einer am Rohr schlupffrei angreifenden, ausgehend von im Abstechkopf eingespannten Rohrende auf vorgebbare Breiten der abzustechenden Rohrstücke einstellbaren Vorschubeinheit vorgeschlagen.

Vorteilhafterweise läßt sich eine CNC-gesteuerte Vorschubeinheit verwenden, da sich auf diese Weise ohne besonderen Aufwand Vorschubschritte mit hoher Genauigkeit steuern lassen.

Um beim Einlegen eines Rohres in die Abstechmaschine einen Ausgangspunkt bezüglich des Rohrendes zu bekommen, kann eine in Vorschubrichtung vor dem Abstechkopf mit vorgebbarem Abstand angeordnete, auf den Durchgang des im Abstechkopf einzuspannenden Rohrendes ansprechende Tasteinrichtung vorgesehen sein. Über die Steuerung läßt sich dann ein erforderlicher Vorschub einstellen, der die Tasteinrichtung als Ausgangspunkt nimmt und bewirkt, daß das Rohr durch den Abstechkopf und die Planscheibe hindurch über eine solche Strecke transportiert wird, daß sich im Bereich des Abstechwerkzeugs ein abzustechendes Rohrstück befindet, das genau die geforderte Breite aufweist.

Die schlupffrei arbeitende Vorschubeinheit kann aus einem das Rohr beidseitig umgreifenden angetriebenen Rollenpaar, Riemenpaar oder Kettenpaar bestehen, deren Oberfläche so beschaffen ist, daß ein schlupffreier Vorschub gewährleistet ist.

Vorzugsweise kann jedoch die Vorschubeinheit mit Spannbacken zum Innenspannen des Rohrendes versehen sein, die in das zum Abstechkopf entgegengesetzte Rohrende eingreifen. Da diese Vorschubeinheit mit ihren Spannbacken am Rohrende angreift, ist damit ein absolut schlupffreier Antrieb gewährleistet, der den Vorteil bietet, daß sich das Rohr mittels der Vorschubeinheit bis weit in den Abstechkopf hinein transportieren läßt, so daß Reststücke nur noch mit einer Länge verbleiben, die der axialen Erstreckung der Spannbacken im Abstechkopf bzw. der Spannbacken der Vorschubeinheit entsprechen.

Um das Rohr genau waagerecht auszurichten, unabhängig von der Exzentrizität oder Ovalität des Innendurchmessers des Rohres mit Bezug auf den Außendurchmesser ist es vorteilhaft, an der Vorschubeinheit eine wenigstens höhenverstellbare, vorzugsweise nach allen Seiten verstellbare und feststellbare Halterung für die Spannbacken vorzusehen.

Das genaue Ausrichten der auf den Ist-Außendurchmesser bezogenen Rohrachse kann dann vorteilhafterweise so erfolgen, daß das hintere Rohrende durch eine zentrisch zur Abstechmaschinenmitte spannende Spannvorrichtung zentriert wird, wonach die Halterung betätigt wird und sich dabei einem ggf. vorhandenen exzentrischen Rohrinnendurchmesser in allen Richtungen anpaßt und dann festgestellt wird.

Die Vorschubeinheit kann einen Schlitten aufweisen, der die Halterung für die Spannbacken trägt und an Längsführungen eines Maschinenbetts verschiebbar angeordnet sein kann.

Um das Einlegen eines Rohres in die Rohrabstechmaschine zu erleichtern und sehr lange Rohre zum Vermeiden einer Durchbiegung zu unterstützen, können des weiteren am Maschinenbett Stützrollen für das Rohr angeordnet sein.

Diese Stützrollen können vorteilhafterweise höheneinstellbar sein, um das in den Stützrollen liegende Rohr mit Bezug auf die dem Ist-Rohraußendurchmesser entsprechende Rohrachse einstellen zu können.

Um harte Zonen im Bereich des Außendurchmessers und im Bereich des Innendurchmessers des Rohres mit vermindertem Vorschub und/oder verminderter Schnittgeschwindigkeit durchstechen zu können, ist es vorteilhaft den Ist-Außendurchmesser und/oder Ist-Innendurchmesser des Rohres zu bestimmen. Dies läßt sich erreichen, wenn der Abstechkopf und/oder die Vorschubeinheit einen axial verschiebbaren, Spannbacken radial spannenden Spannkolben aufweist und mit dem Spannkolben ein Weggeber zum Ermitteln des Ist-Außendurchmessers und/oder des Ist-Innendurchmessers des Rohres aus dem Weg des Bandkolbens gekuppelt ist.

Der Ist-Außendurchmesser läßt sich auch mit Hilfe eines Weggebers an einer Spannvorrichtung an einem Abgreifer für das abgestochene Rohrstück ermitteln.

Schließlich ist es auch noch möglich, den Ist-Außendurchmesser eines Rohres zu bestimmen, bevor es mit seinem vorderen Ende durch den Abstechkopf geschoben wird. Hierzu läßt sich ein am Maschinenbett angeordnetes Durchmessermeßgerät, vorzugsweise ein Lasermeßgerät, verwenden, das den Ist-Außendurchmesser, um den Weg bis zum Abstechbereich versetzt, mißt und die Meßwerte an eine Steuerung für die Abstechmaschine übermittelt.

Wird der Ist-Außendurchmesser des Rohres auf diese oder auf andere Weise ermittelt, läßt sich das Abstechwerkzeug im Eilgang sehr nahe an die Außenoberfläche des Rohres heranführen, so daß hierdurch die Totzeiten der Rohrabstechmaschine noch weiter vermindert werden.

Die Erfindung wird nachstehend anhand eines in der Zeichnung dargestellten Ausführungsbeispiels des näheren erläutert. In der Zeichnung zeigen:

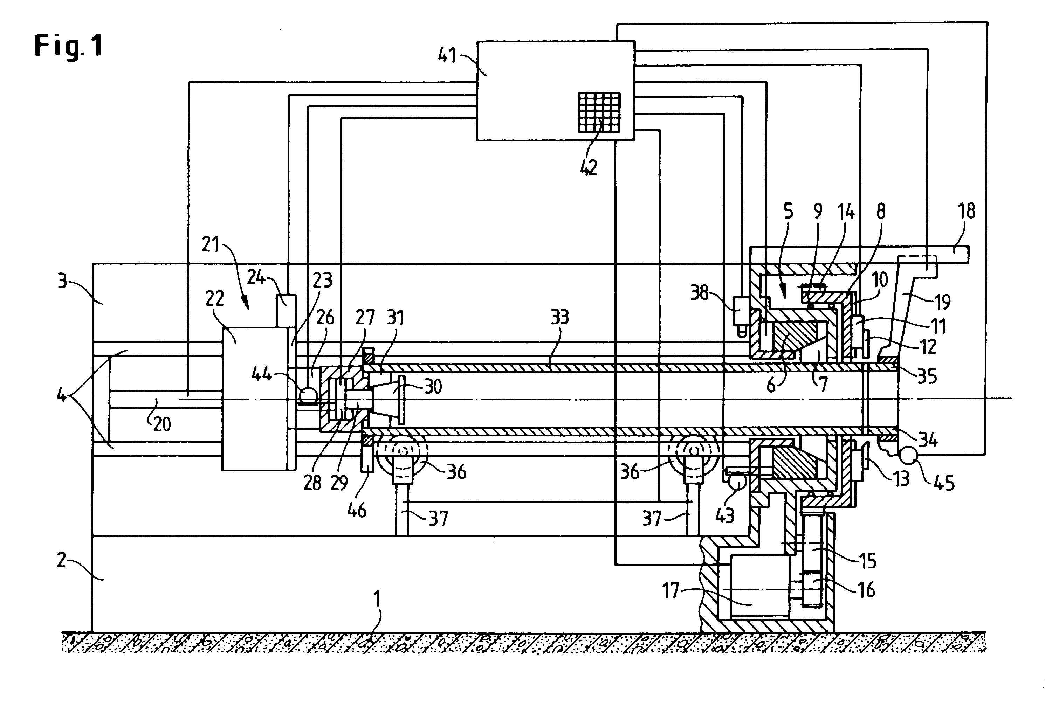

- Fig. 1: eine Seitenansicht, teilweise im Schnitt der Rohrabstechmaschine und

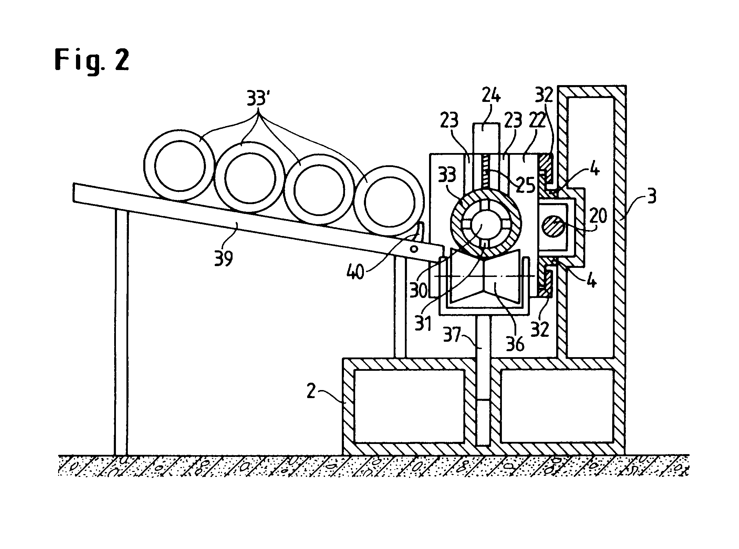

- Fig. 2: eine Ansicht der Rohrabstechmaschine gemäß Fig. 1 in Richtung der Vorschubeinheit, teilweise im Schnitt.

Auf einem Fundament 1 ist ein Maschinenbett 2 einer Rohrabstechmaschine aufgebaut. Dieses Maschinenbett 2 weist einen seitlichen Führungsschienenträger 3 mit parallelen Führungsschienen 4 auf. Die Länge des Maschinenbetts 2 ist an die Länge der abzustechenden Rohre angepaßt, die von 3 m bis 10 m gehen kann.

An einem Ende des Maschinenbetts 2 ist ein Abstechkopf 5 angeordnet, der hier nur schematisch dargestellt ist. An dem Abstechkopf 5 ist eine Planscheibe 8 mittels Wälzlagern 9 drehbar gelagert. Der genaue Aufbau des Abstechkopfs 5 mit der Planscheibe 8 läßt sich aus dem europäischen Patent 0 425 994 derselben Anmelderin entnehmen.

Der Abstechkopf 5 weist einen Ringkolben 6 mit Schrägflächen auf, der sich pneumatisch oder hydraulisch verschieben läßt und dabei mit entsprechenden Schrägflächen an Spannbacken 7 zusammenwirkt, die auf diese Weise radial gegen den Außenumfang eines Rohres 33 gespannt werden. Mittels eines mit dem Ringkolben 6 verbundenen Wegaufnehmers 43 läßt sich die axiale Lage des Ringkolbens nach dem Spannen eines Rohres 33 und damit der Ist-Außendurchmeser des Rohres 33 bestimmen.

Anstelle des Wegaufnehmers 43 am Abstechkopf 6 läßt sich auch ein Wegaufnehmer 45 an einer Spannvorrichtung am Abgreifer 19 in analoger Weise verwenden. Ebenso ist es möglich, den Ist-Außendurchmesser eines Rohres 33 zu bestimmen, bevor es mit seinem vorderen Ende durch den Abstechkopf 5 geschoben wird. Hierzu läßt sich ein am Maschinenbett 2 angeordnetes Lasermeßgerät verwenden, das den Ist-Außendurchmesser um den Weg bis zum Abstechbereich versetzt mißt und die Meßwerte an eine CNC-Steuerung 41 für die Rohrabstechmaschine übermittelt.

An der Planscheibe 8 sind Radialführungen 10 angeordnet, an denen sich Schlitten 11 mit einem Abstechwerkzeug 12 und einem Anfaswerkzeug 13 radial verstellen lassen. Die Planscheibe 8 weist eine Außenverzahnung 14 auf, die über ein Zwischenrad 15 und ein Ritzel 16 mit einem Antriebsmotor 17 gekuppelt ist und auf diese Weise durch den Antriebsmotor 17 in Drehung versetzt wird. An einem Träger 18 ist ein Abgreifer 19 verschiebbar angeordnet, der dazu dient, ein abgestochenes Rohrstück 34 zu greifen und abzulegen.

Zwischen den Führungsschienen 4 ist am Führungsschienenträger 3 eine antreibbare Spindel 20 gelagert, die zum Bewegen einer Vorschubeinheit 21 entlang der Führungsschienen 4 dient.

Im Einzelnen besteht die Vorschubeinheit 21 aus einem Schlitten 22 der mittels Führungen 33, die die Führungsschienen 4 hintergreifen, am Führungsschienenträger 3 verschiebbar gelagert ist.

Ein am Schlitten 22 befestigter Antriebsmotor 24 versetzt eine Spindel 25 in Drehung, mittels der sich eine Halterung 26 für eine Spannbuchse 27 in der Höhe verstellen läßt. In der Spannbuchse 27 ist ein Kolben 28 angeordnet, der über eine Zugstange 29 mit einem Konus 30 in Verbindung steht. Dieser Konus 30 wirkt mit seinen Schrägflächen auf entsprechende Schrägflächen von Spannbacken 31, die sich auf diese Weise radial verstellen lassen und zum Innenspannen des Rohres 33 dienen. Mittels eines mit dem Ringkolben 6 verbundenen Wegaufnehmers 44 läßt sich die axiale Lage des Ringkolbens nach dem Spannen eines Rohres 33 und damit der Ist-Innendurchmesser des Rohres 33 bestimmen. Mehrere Rohre 33' sind auf einem Gestell 39 angeordnet und werden durch einen steuerbaren Anschlag 40 gehalten.

Um ein neues Rohr 33 in die Abstechmaschine einzulegen, wird die Vorschubeinheit 21 in die äußerste linke Stellung gefahren. Sodann wird der Anschlag 40 kurzzeitig abgesenkt, so daß ein Rohr 33' auf Stützrollen 36 rollen kann. Das nächstfolgende Rohr 33' wird danach sogleich wieder durch den Anschlag 40 festgehalten.

Die Stützrollen 36 werden durch Tragstangen 37 gehalten, die in Führungen am Maschinenbett 2 höhenverstellbar gehalten sind.

Mittels einer Steuereinheit 41, die vorzugsweise eine CNC-Steuerung der Abstechmaschine enthält, lassen sich die Stützrollen 36, abhängig vom Außendurchmesser des Rohres 33 in der Höhe so verstellen, daß die auf den Ist-Außendurchmesser des Rohres 33 bezogene Achse des Rohres genau in der Achse des Abstechkopfs 5 und der Planscheibe 8 zu liegen kommt.

Nunmehr wird die Vorschubeinheit 21 an das Rohrende herangefahren und mittels der auf den Antriebsmotor 24 wirkenden Steuereinheit 41 ebenfalls genau in der Höhe eingestellt, wobei diese Höheneinstellung allerdings so erfolgt, daß ggf. vorhandene Ovalitäten und Exzentrizitäten des Innendurchmessers des Rohres 33 gegenüber dem Außendurchmesser so berücksichtigt werden, daß sich die auf den Außendurchmesser bezogene Achsenlage beim Spannen der Spannbacken 31 der Vorschubeinheit 21 nicht verändert. Die Spannbuchse 27 legt sich beim Spannen der Spannbacken 31 an die Stirnfläche des Rohres 33 an, so daß sich daraus eine definierte Lage des Rohrendes bzgl. der Vorschubeinheit 21 ergibt. Aus der mittels des Weggebers 44 aufgenommenen axialen Lage des Kolbens 28, die ein Maß für die radiale Aufspreizung der Spannbacken 31 ist, läßt sich unmittelbar der Ist-Innendurchmesser des Rohres 33 ableiten und in die Steuereinheit 41 eingeben.

Wird im Bereich des hinteren Rohrendes eine auf die Abstechmaschinenachse ausgerichtete, das Rohr 33 am Außendurchmesser erfassende Spannvorrichtung 46 angeordnet, kann die Halterung 26 am Schlitten 22 nach allen Richtungen frei beweglich sein und wird erst nach dem Spannen der Spannbacken 31 festgestellt, so daß auf diese Weise ein einfaches Zentrieren des Ist-Außendurchmessers des Rohres 33 mit Bezug auf die Abstechmaschinenachse erfolgt.

Sodann wird das Rohr 33 mittels der Vorschubeinheit 21 über die durch die Steuerungseinheit 41 bewirkte Drehung der Spindel 20 in Richtung des Abstechkopfes 5 mit der Planscheibe 8 verschoben.

Von einer am Gehäuse des Abstechkopfes 5 befestigten Tasteinrichtung 38, die vorzugsweise als Fotozelle ausgebildet ist, gelangt ein Signal an die Steuereinheit 41, sobald die Rohrstirnseite 35 in den Bereich der Tasteinrichtung 38 gelangt. Da diese Tasteinrichtung 38 einen festliegenden, der Steuereinrichtung 41 eingegebenen Abstand zum Abstechwerkzeug 12 aufweist, wird das Rohr 33 nunmehr mittels der Vorschubeinheit 21 soweit durch den Abstechkopf 5 und die Planscheibe 8 hindurchgefahren, daß die Rohrstirnseite 35 im Bereich des Abstechwerkzeugs 12 mit einer geringfügigen Zugabe liegt, woraufhin, durch die Steuereinheit 41 gesteuert, die Spannbacken 7 mittels des Ringkolbens 6 gegen die Rohraußenfläche gespannt werden. Auch hier ergibt die durch den Weggeber 43 aufgenommene axiale Lage des Ringkolbens 6 unmittelbar den Ist-Außendurchmesser des Rohres 6.

Ein definierter, in seiner Lage genau festliegender Rohranfang wird dadurch festgelegt, daß die Rohrstirnseite 35 mittels des Abstechwerkzeuges 12 einem Planbearbeitungsgang unterzogen wird, mit dem sich Verunreinigungen beseitigen und eine genau rechtwinklige Lage der Stirnseite 35 zur Rohrachse herstellen lassen.

Ausgehend von dem nunmehr festgelegten, definierten Rohranfang, steuert die Steuereinheit 41 die Vorschubeinheit 21 so an, daß das Rohr 33 nach Lösen der Spannbacken 7 genau um den Vorschubweg weitergeschoben wird, der der Breite des abzustechenden Rohrstücks 34 zuzüglich einer der Breite des Abstechwerkzeugs 12 entsprechenden Bearbeitungszugabe entspricht.

Der Abgreifer 19 ergreift das abzustechende Rohrstück 34, die Werkzeuge 12, 13 werden während der Drehung der Planscheibe 8 zunächst im Eilgang zugestellt, bis sie die Rohraußenoberfläche fast berühren, wonach die Werkzeuge 12, 13 mit vermindertem Vorschub und/oder verminderter Schnittgeschwindigkeit gegen die Rohraußenoberfläche gefahren werden und eine harte Zone im Bereich des Rohraußendurchmessers, z. B. eine zunderbehaftete Walzhaut, eine harte Gußhaut oder eine beim Abkühlen hart gewordene Zone durchstechen. Nach dem Durchstechen dieser harten Zone werden der Vorschub und/oder die Schnittgeschwindigkeit soweit erhöht, wie es das Rohrmaterial zuläßt, um ein Rohrstück mit möglichst hoher Zerspanungsleistung abzustechen.

Kurz vor Erreichen des Innendurchmessers des Rohres werden der Vorschub und/oder die Schnittgeschwindigkeit erneut wieder herabgesetzt, um eine in diesem Bereich ggf. ebenfalls vorhandene harte Zone langsam unter möglichster Schonung der Abstechwerkzeuge zu durchstechen und um das Rohrstück bei verminderter Gratbildung und unter vollständigem Abtrennen eines dünnen und sauberen Ringspans vollständig abzustechen. Das Rohrstück 34 wird während des Abstechens oder danach noch ggf. angefast, wonach es durch den Abgreifer 19 axial verschoben und abgelegt wird.

Das axiale Verfahren des Abgreifers läßt sich vorteilhafterweise um Nebenzeiten zu sparen, mit einem Signal aus einer Schnittkraftmeßeinrichtung, die feststellt, wann der Zerspanungsvorgang beendet ist, starten.

Die Werkzeuge 12, 13 lassen sich nunmehr radial in die Ausgangsstellung zurückfahren, jedoch besteht dabei aufgrund der Materialelastizitäten die Gefahr, daß die Werkzeuge 12, 13 die Stirnfläche des Rohres 33 berühren, dabei verschleißen und eine Spiralnut einbringen. Um dieses zu vermeiden, kann das Rohr 33 nach dem Abstechen und ggf. Anfasen des Rohrstücks 34 und nach dem Öffnen der Spannbacken 6 des Abstechkopfes 5 mittels der Vorschubeinheit 21 ein kurzes Wegstück zurückgezogen werden, wonach die Werkzeuge 12, 13 ohne die Rohrstirnfläche zu berühren, zurückgezogen werden.

Die Steuereinheit 41 gibt alsdann erneut einen Befehl an die Vorschubeinheit 21, das Rohr 33 um den eingegebenen Weg zuzüglich des Weges, um den das Rohr 33 zurückgefahren wurde, vorzufahren, um wiederum ein Rohrstück 34 abzustechen.

Da sich die CNC-Steuerung der Vorschubeinheit 21 hervorragend eignet, nicht nur stets genau dieselbe Breite der abzustechenden Rohrstücke 34 einzustellen, sondern auch Korrekturwerte berücksichtigen kann, ist es bei der erfindungsgemäßen Abstechmaschine ohne weiteres möglich, den Seitenverschleiß des Abstechwerkzeugs 12 einzugeben. Dies kann dadurch geschehen, daß die Breite der abgestochenen Rohrstücke 34 gemessen und bei Überschreiten einer vorgebbaren Breite ein Korrekturwert über eine Tastatur 42 in die Steuereinheit 41 eingegeben wird.

Ebenso ist es möglich, die Steuereinheit 41 aufgrund von Erfahrungswerten zu programmieren, d. h. nach dem Abstechen einer vorgebbaren Anzahl von Rohrstücken 34 wird automatisch der Vorschubweg um den erforderlichen Betrag korrigiert.

Da die Spannbuchse 27 und der Träger 26 einen Durchmesser aufweisen, der maximal gleich dem Außendurchmesser des Rohres 33 ist und die Länge der Spannbuchse 27 und der Halterung 26 ausreicht, um das Rohr 33 bis in den Bereich der Spannbacken 7 im Abstechkopf 5 zu schieben, läßt sich das Rohr 33 bis auf ein kurzes Reststück in die Rohrstücke 34 zerteilen.

Die Stützrollen 36 können nicht nur dazu dienen, das Rohr 33 zu halten, wenn ein neues Rohr 33 in die Abstechmaschine eingelegt wird. Insbesondere bei sehr langen Rohren, deren Länge maximal bis zu 10 m betragen kann, ist es vorteilhaft, das Rohr 33 im Bereich zwischen der Vorschubeinheit 21 und dem Abstechkopf 5 abzustützen, um eine Durchbiegung, die eine Schrägstellung der Rohrstirnseite zur Folge hätte, zu vermeiden. Selbstverständlich müssen die Stützrollen 36 in dem Moment abgesenkt werden, wenn der Schlitten 22 in den Bereich einer Stützrolle 36 gelangt. Dies läßt sich ebenfalls mittels der Steuereinheit 41 automatisch bewerkstelligen. Ebenso ist es möglich, den Schlitten 22 der Vorschubeinheit 21 so zu gestalten, daß er auf seiner Bahn nicht mit den Stützrollen 36 kollidiert.

Dadurch, daß die erfindungsgemäße Abstechmaschine keinen Anschlag benötigt, der bei jeder Vorschubbewegung des Rohres 33 in den Bereich der Rohrstirnseite 35 bewegt und nach dem Spannen mittels der Spannbacken 7 wieder aus dem Bereich der Rohrstirnseite 35 herausbewegt werden müßte, entstehen im Zusammenhang mit dem schrittweisen Vorschub des Rohres 33 keine zusätzlichen Totzeiten, wodurch die Arbeitsweise der erfindungsgemäßen Abstechmaschine erheblich beschleunigt wird.

Da die Vorschubeinrichtung 21 mittels der CNC-Steuerung 41 bewegt wird, ist es auch möglich, die Beschleunigung und Geschwindigkeit des Rohres 33 optimal der Rohrmasse anzupassen und dadurch die Nebenzeiten auf einen Minimalwert herabzusetzen.

Die dargestellte Vorschubeinrichtung 21, die am Ende des Rohres 33 angreift, stellt eine bevorzugte Ausführungsform dar. Die Erfindung erstreckt sich jedoch auch auf schlupffreie Vorschubeinheiten, die unmittelbar benachbart zum Abstechkopf 5 an dem Rohr 33 angreifen, wenn gewährleistet ist, daß sich eine solche Vorschubeinheit durch die Steuereinheit 41 so ansteuern läßt, daß wiederholbar stets der eingestellte Vorschubweg zum Abstechen von Rohrstücken 34 vorgegebener Breite und innerhalb der vorgegebenen Toleranzen zurückgelegt wird, ohne daß im Bereich der Planscheibe 8 oder des Abgreifers 19 angeordnete Anschläge erforderlich sind.

Auch das Messen des Ist-Außendurchmessers und Ist-Innendurchmessers des Rohres kann auf andere Weise als mittels einer Wegmessung der Kolben 6, 28, z. B. durch berührungslose Sensoren, erfolgen. Sind keine größeren Toleranzen bei den Rohraußen- und -innendurchmessern zu erwarten, kann es ausreichen, den Nenn-Außendurchmesser und den Nenn-Innendurchmesser über die Tastatur 42 in die Steuerung 41 einzugeben.

## Patentansprüche

1. Verfahren zum Abstechen und ggf. Anfasen von Rohrstücken von einem Rohr mit einer harten Zone wenigstens im Bereich des Außendurchmessers, insbesondere von dickwandigen Rohren zum Herstellen von Kugellagerringen, mit den Schritten:
- Messen des Ist-Außendurchmessers des Rohres im Bereich der Abstechstelle am Rohr oder Eingeben des Nenn-Außendurchmessers des Rohres,
- Heranfahren eines Abstechwerkzeugs an die Außenoberfläche des Rohres im Eilgang,
- Umschalten des Vorschubs und/oder der Schnittgeschwindigkeit auf einen niedrigen Wert zum Durchstechen der harten Zone,
- Umschalten des Vorschubs und/oder der Schnittgeschwindigkeit auf einen dem Rohrmaterial angepaßten Arbeitsgang zum schnellen Abstechen eines Ringes.

2. Verfahren nach Anspruch 1 mit den zusätzlichen Schritten:
- Messen des Ist-Innendurchmessers des Rohres oder Eingeben des Nenn-Innendurchmessers des Rohres,
- Umschalten des Vorschubs und/oder der Schnittgeschwindigkeit auf einen niedrigeren Wert bei Annäherung an den Innendurchmesser zum vollständigen Abstechen des Rohrstücks bei verminderter Gratbildung und mit vollständigem Abtrennen eines dünnen und sauberen Ringspans sowie vermindertem Werkzeugverschleiß bei Vorhandensein einer harten Zone im Bereich des Innendurchmessers.

3. Verfahren nach Anspruch 1 oder 2 mit den zusätzlichen Schritten:
- Messen der Schnittkraft während des Abstechens,
- Abführen des abgestochenen Rohrstücks mittels einer Abgreifvorrichtung, sobald die Schnittkraft unter einen vorgebbaren Wert abfällt.

4. Verfahren zum Abstechen von Rohrstücken von einem Rohr, insbesondere nach einem oder mehreren der Ansprüche 1 bis 3, mit den Schritten:
- Einlegen eines Rohres in eine Rohrabstechmaschine,
- Ergreifen des Rohres durch eine schlupffreie Vorschubeinheit,
- Vorfahren des Rohres mittels des Vorschubeinheit,
- Erfassen des Durchgangs des Rohrendes vor dem Einschieben in einen Abstechkopf mit Spannbacken mittels einer Tasteinheit,
- Vorfahren des Rohres durch den Abstechkopf über eine einstellbare Strecke und Spannen der Spannbacken,
- Planbearbeiten der aus dem Abstechkopf herausragenden Rohrstirnseite zum Festlegen eines definierten Rohranfangs,
- CNC-gesteuertes Vorfahren des Rohres um eine eingebbare Breite des abzustechenden Rohrstücks, ausgehend vom definierten Rohranfang,
- Abstechen und ggf. Anfasen des Rohrstücks mit umschaltbarer Vorschub- und/oder Schnittgeschwindigkeit und
- Wiederholen des Vorfahrens und Abstechens.

5. Verfahren nach Anspruch 4, **dadurch gekennzeichnet,** daß die Abnutzung des zum Planbearbeiten der Rohrstirnseite und zum Abstechen der Rohrstücke verwendeten Werkzeugs durch die Vorschubsteuerung berücksichtigt wird.

6. Verfahren nach Anspruch 4 oder 5, **dadurch gekennzeichnet,** daß das Rohr mittels einer am Rohrende eingreifenden Vorschubeinheit mit Spannbacken zum Innenspannen so lange stufenweise vorgefahren wird, bis nur noch ein Reststück entsprechend der erforderlichen Spannlänge im Abstechkopf verbleibt, das Reststück mittels der Vorschubeinheit aus dem Abstechkopf zurückgezogen und das zurückgezogene Reststück abgestreift wird.

7. Verfahren nach Anspruch 4, 5 oder 6, **dadurch gekennzeichnet,** daß das Rohr nach dem Abstechen und ggf. Anfasen des Rohrstücks und nach dem Öffnen der Spannbacken des Abstechkopfs mittels der Vorschubeinheit ein kurzes Wegstück zurückgezogen wird, das Abstechwerkzeug und ggf. das Anfaswerkzeug, ohne die Rohrstirnfläche zu berühren, zurückgezogen werden und der Vorschubweg zum Abstechen und ggf. Anfasen eines weiteren Rohrstücks um das Wegstück beim Zurückziehen vergrößert wird.

8. Verfahren nach Anspruch 4, 5, 6 oder 7, dadurch gekennzeichnet, daß die Beschleunigung und die Geschwindigkeit des Rohrvorschubs in Abhängigkeit von der vorhandenen Rohrmasse gesteuert werden.

9. Rohrabstechmaschine, insbesondere zur Durchführung des Verfahrens gemäß einem oder mehreren der Ansprüche 1 bis 8, mit
- einem Abstechkopf (5) mit Spannbacken (7) zum Außenspannen eines Rohrendes,
- einer drehbaren Planscheibe (8) zur Aufnahme von wenigstens einem radial zustellbaren Abstechwerkzeug (12) zum Abstechen mit umschaltbarer Vorschub- und/oder Schnittgeschwindigkeit und ggf. wenigstens einem radial zustellbaren Faswerkzeug (13) und
- einer am Rohr schlupffrei angreifenden, ausgehend von im Abstechkopf (5) eingespannten Rohrende auf vorgebbare Breiten der abzustechenden Rohrstücke (34) einstellbaren Vorschubeinheit (21).

10. Rohrabstechmaschine nach Anspruch 9, **gekennzeichnet durch** eine CNC-gesteuerte Vorschubeinheit (21).

11. Rohrabstechmaschine nach Anspruch 10, **gekennzeichnet durch** eine in Vorschubrichtung vor dem Abstechkopf (5) mit vorgebbarem Abstand angeordnete, auf den Durchgang des im Abstechkopf (5) einzuspannenden Rohrendes ansprechende Tasteinrichtung (38).

12. Rohrabstechmaschine nach einem oder mehreren der Ansprüche 9 bis 11, **gekennzeichnet durch** eine Vorschubeinheit (21) mit Spannbacken (31) zum Innenspannen des Rohrendes.

13. Rohrabstechmaschine nach Anspruch 12, **gekennzeichnet durch** eine wenigstens höhenverstellbare, vorzugsweise nach allen Seiten verstellbare und feststellbare Halterung (26) an der Vorschubeinheit (21) für die Spannbacken (31).

14. Rohrabstechmaschine nach Anspruch 13, **gekennzeichnet durch** eine zentrisch zur Abstechmaschinenmitte spannende Spannvorrichtung (46) im Bereich des hinteren Rohrendes, die den Rohraußendurchmesser zur Abstechmaschinenmitte zentriert, so daß sich die feststellbare Halterung (26) einem ggf. exzentrischen Rohrinnendurchmesser in allen Richtungen anpassen kann.

15. Rohrabstechmaschine nach einem oder mehreren der Ansprüche 9 bis 14, **gekennzeichnet durch** ein Maschinenbett (2) mit Längsführungen (4) und einem Antrieb (20) für die mittels eines Schlittens (22) an den Führungen (4) verschiebbare Halterung (26) für die Spannbacken (31) und mindestens eine am Maschinenbett (2) angeordneten Stützrolle (36) für das Rohr (33).

16. Rohrabstechmaschine nach Anspruch 15, **dadurch gekennzeichnet,** daß die Stützrolle(n) (36) zum Ausrichten der Rohrachse des in den Stützrollen (26) liegenden Rohres (33), bezogen auf den gemessenen Ist-Außendurchmesser auf, die Achse des Abstechkopfs (5) höheneinstellbar ist (sind).

17. Rohrabstechmaschine nach einem oder mehreren der Ansprüche 9 bis 16, **gekennzeichnet durch** einen Abstechkopf (5) mit einem axial verschiebbaren, die Spannbacken (7) radial spannenden Spannkolben (6) und einem mit dem Spannkolben (6) gekuppelten Weggeber (43) zum Ermitteln des Ist-Außendurchmessers des Rohres (33) aus dem Weg des Spannkolbens (6).

18. Rohrabstechmaschine nach einem oder mehreren der Ansprüche 9 bis 16, **gekennzeichnet durch** einen Weggeber (45) an einer Spannvorrichtung an einem Abgreifer (19) zum Messen des Ist-Außendurchmessers des Rohres (33).

19. Rohrabstechmaschine nach einem oder mehreren der Ansprüche 9 bis 18, **gekennzeichnet durch** eine Vorschubeinheit (21) mit einem axial verschiebbaren, die Spannbacken (31) radial spannenden Spannkolben (28) und einem mit dem Spannkolben (28) gekuppelten Weggeber (44) zum Ermitteln des Ist-Innendurchmessers des Rohres (33) aus dem Weg des Spannkolbens (6).

20. Rohrabstechmaschine nach einem oder mehreren der Ansprüche 9 bis 16, **gekennzeichnet durch** ein vor dem Abstechkopf (5) angeordnetes Durchmessermeßgerät, vorzugsweise ein Lasermeßgerät, das den um den Weg zum Abstechbereich versetzten Ist-Außendurchmesser mißt und zur Steuerung (41) für die Abstechmaschine übermittelt.

## Claims

1. A process for cutting off and possibly chamfering pipe pieces from a pipe with a hard zone at least in the region of the external diameter, in particular from thick-walled pipes to produce ball-bearing races, comprising the steps:
- measuring the actual external diameter of the pipe in the region of the cutting-off point on the pipe or entering the nominal external diameter of the pipe,
- bringing a cutting-off tool up to the outer surface of the pipe in a rapid motion,
- switching the feed and/or the cutting speed to a lower value to pierce the hard zone,
- switching the feed and/or the cutting speed to a working cycle adapted to the pipe material for rapidly cutting off a ring.

2. A process according to Claim 1, comprising the additional steps:
- measuring the actual internal diameter of the pipe or entering the nominal internal diameter of the pipe,
- switching the advance and/or the cutting speed to a lower value on approaching the internal diameter for completely cutting off the pipe piece with reduced burring and with complete separation of a thin, clean cut ring and reduced tool wear if a hard zone is present in the region of the internal diameter.

3. A process according to Claim 1 or 2, comprising the additional steps:
- measuring the shearing force during cutting-off,
- removing the cut-off pipe piece by means of a take-off device as soon as the shearing force drops below a presettable value.

4. A process for cutting off pipe pieces from a pipe, in particular in accordance with one or more of Claims 1 to 3, comprising the steps:
- placing a pipe in a pipe cutting-off machine,
- gripping of the pipe by a non-slip feed unit,
- advancing of the pipe by means of the feed unit,
- detecting the passage of the pipe end before insertion into a cutting-off head with clamping jaws by means of a sensor unit,
- advancing of the pipe through the cutting-off head over an adjustable distance and clamping the clamping jaws,
- facing the pipe end face projecting from the cutting-off head to define a defined start of the pipe,
- CNC-controlled advancing of the pipe by a settable width of the pipe piece which is to be cut off, starting from the defined start of the pipe,
- cutting-off and possibly chamfering of the pipe piece with reversible feed and/or cutting speed, and
- repetition of the advancing and cutting-off operations.

5. A process according to Claim 4, characterised in that allowance is made for the wear of the tool used for facing the pipe end face and for cutting off the pipe pieces by the advance control means.

6. A process according to Claim 4 or 5, characterised in that the pipe is advanced step-wise, by means of a feed unit with clamping jaws for internal clamping which engages on the pipe end, until only a residual piece remains in the cutting-off head, corresponding to the required clamping length, the residual piece is withdrawn from the cutting-off head by means of the feed unit and the withdrawn residual piece is stripped off.

7. A process according to Claim 4, 5 or 6,
characterised in that the pipe, after cutting-off and possibly chamfering of the pipe piece and after the opening of the clamping jaws of the cutting-off head, is withdrawn by a short path portion by means of the feed unit, the cutting-off tool and possibly the chamfering tool is/are withdrawn without touching the pipe end face and the feed path for cutting off and possibly chamfering an additional pipe piece is increased by the path portion upon withdrawal.

8. A process according to Claims 4, 5, 6 or 7,
characterised in that the acceleration and the speed of the pipe advance are controlled dependent on the pipe mass present.

9. A pipe cutting-off machine, in particular for performing the process according to one or more of Claims 1 to 8, comprising:
- a cutting-off head (5) with clamping jaws (7) for externally clamping a pipe end,
- a rotatable face plate (8) for receiving at least one radially advanceable cutting-off tool (12) for cutting with reversible feed and/or cutting speed and possibly at least one radially advanceable chamfering tool (13), and
- a feed unit (21) engaging in non-slip manner on the pipe and which can be adjusted to presettable widths of the pipe pieces (34) to be cut off, starting from the pipe end clamped in the cutting-off head (5).

10. A pipe cutting-off machine according to Claim 9, characterised by a CNC-controlled feed unit (21).

11. A pipe cutting-off machine according to Claim 10, characterised by a sensor means (38) arranged in the direction of advance at a presettable distance in front of the cutting-off head (5) which responds to the passage of the pipe end to be clamped in the cutting-off head (5).

12. A pipe cutting-off machine according to one or more of Claims 9 to 11, characterised by a feed unit (21) with clamping jaws (31) for internally clamping the pipe end.

13. A pipe cutting-off machine according to Claim 12, characterised by a holding means (26) which is at least vertically adjustable, preferably adjustable and lockable to all sides, on the feed unit (21) for the clamping jaws (31).

14. A pipe cutting-off machine according to Claim 13, characterised by a clamping device (46) which clamps centrically to the centre of the cutting-off machine in the region of the rear pipe end, which device centres the external diameter of the pipe relative to the centre of the cutting-off machine, so that the lockable holding means (26) can adapt to a possibly eccentric internal pipe diameter in all directions.

15. A pipe cutting-off machine according to one or more of Claims 9 to 14, characterised by a machine bed (2) with longitudinal guides (4) and a drive (20) for the holding means (26) for the clamping jaws (31) which is displaceable on the guides (4) by means of a slide (22) and at least one supporting roller (36), located on the machine bed (2), for the pipe (33).

16. A pipe cutting-off machine according to Claim 15, characterised in that the supporting roller(s) (36) for aligning the axis of the pipe (33) lying in the supporting rollers (26), relative to the measured actual external diameter, is (are) vertically adjustable to the spindle of the cutting-off head (5).

17. A pipe cutting-off machine according to one or more of Claims 9 to 16, characterised by a cutting-off head (5) with an axially displaceable clamping piston (6) which radially clamps the clamping jaws (7), and a displacement transducer (43) coupled to the clamping piston (6) for determining the actual external diameter of the pipe (33) from the path of the clamping piston (6).

18. A pipe cutting-off machine according to one or more of Claims 9 to 16, characterised by a displacement transducer (45) on a clamping device on a take-off device (19) for measuring the actual external diameter of the pipe (33).

19. A pipe cutting-off machine according to one or more of Claims 9 to 18, characterised by a feed unit (21) with an axially displaceable clamping piston (28) which radially clamps the clamping jaws (31) and a displacement transducer (44) coupled to the clamping piston (28) for determining the actual internal diameter of the pipe (33) from the path of the clamping piston (6).

20. A pipe cutting-off machine according to one or more of Claims 9 to 16, characterised in a diameter-measuring apparatus located in front of the cutting-off head (5), preferably a laser measuring apparatus, which measures the actual external diameter offset by the path to the cutting-off region and transmits it to the control means (41) for the cutting-off machine.

## Revendications

1. Procédé pour tronçonner et éventuellement chanfreiner des morceaux de tube à partir d'un tube présentant une zone dure au moins au voisinage du diamètre extérieur, notamment de tubes à paroi épaisse pour réaliser des bagues de roulement à billes, comportant les étapes suivantes:
- mesure du diamètre extérieur réel du tube au voisinage du point de tronçonnage sur le tube ou introduction du diamètre extérieur nominal du tube,
- approche d'un outil de tronçonnage vers la surface extérieure du tube, à grande vitesse,
- commutation de l'avance et/ou de la vitesse de coupe sur une valeur réduite pour percer la zone dure,
- commutation de l'avance et/ou de la vitesse de coupe sur une vitesse de travail adaptée à la matière du tube pour le tronçonnage rapide d'une bague.

2. Procédé selon la revendication 1, comportant les étapes supplémentaires suivantes:
- mesure du diamètre intérieur réel du tube ou introduction du diamètre intérieur nominal du tube,
- commutation de l'avance et/ou de la vitesse de coupe sur une valeur plus basse à l'approche du diamètre intérieur pour le tronçonnage complet du morceau de tube avec formation réduite de bavures et avec sectionnement complet d'un copeau annulaire mince et propre, ainsi qu'avec une usure réduite de l'outil en présence d'une zone dure au voisinage du diamètre intérieur.

3. Procédé selon la revendication 1 ou 2, comportant les étapes supplémentaires suivantes:
- mesure de la force de coupe pendant le tronçonnage,
- évacuation du morceau de tube tronçonné au moyen d'un dispositif de préhension et d'enlèvement, dès que la force de coupe passe au-dessous d'une valeur prédéterminée.

4. Procédé de tronçonnage de morceaux de tube, notamment selon une ou plusieurs des revendications 1 à 3, comportant les étapes suivantes:
- mise en place d'un tube dans une machine à tronçonner les tubes,
- saisie du tube par une unité d'avance sans glissement,
- avance du tube au moyen de l'unité d'avance,
- détection du passage de l'extrémité du tube avant son introduction dans une tête de tronçonnage munie de mâchoires de serrage, au moyen d'une unité de palpage,
- avance du tube à travers la tête de tronçonnage sur une distance réglable et serrage des mâchoires de serrage,
- dressage de la face frontale du tube, ressortant de la tête de tronçonnage, pour fixer une amorce de tube définie,
- avance à commande numérique du tube sur une longueur sélectionnable du morceau de tube à tronçonner, en partant de l'amorce de tube définie,
- tronçonnage et éventuellement chanfreinage du morceau de tube avec une vitesse d'avance et/ou de coupe commutable et
- répétition de l'avance et du tronçonnage.

5. Procédé selon la revendication 4, caractérisé en ce que l'usure de l'outil utilisé pour le dressage de la face frontale du tube et pour le tronçonnage des morceaux de tube est prise en compte par la commande d'avance.

6. Procédé selon la revendication 4 ou 5, caractérisé en ce que le tube est avancé pas à pas au moyen d'une unité d'avance, agissant sur l'extrémité du tube et comportant des mâchoires de serrage pour serrage intérieur, jusqu'à ce qu'il ne reste plus dans la tête de tronçonnage qu'un morceau résiduel correspondant à la longueur de serrage nécessaire, le morceau résiduel est retiré de la tête de tronçonnage au moyen de l'unité d'avance et le morceau résiduel retiré est enlevé.

7. Procédé selon la revendication 4, 5 ou 6, caractérisé en ce qu'après tronçonnage et éventuellement chanfreinage du morceau de tube et après ouverture des mâchoires de serrage de la tête de tronçonnage, le tube est reculé au moyen de l'unité d'avance, sur une courte distance, l'outil de tronçonnage et éventuellement l'outil de chanfreinage sont retirés, sans contact avec la face frontale du tube, et la course d'avance pour le tronçonnage et éventuellement le chanfreinage d'un autre morceau de tube est augmentée de la distance du recul.

8. Procédé selon la revendication 4, 5, 6 ou 7, caractérisé en ce que l'accélération et la vitesse de l'avance du tube sont commandées en fonction de la masse du tube concerné.

9. Machine pour tronçonner les tubes, notamment pour la mise en oeuvre du procédé selon une ou plusieurs des revendications 1 à 8, comportant
- une tête de tronçonnage (5) avec mâchoires de serrage (7) pour le serrage extérieur de l'extrémité d'un tube,
- un disque de dressage rotatif (8) destiné à recevoir au moins un outil de tronçonnage (12) ajustable radialement pour le tronçonnage avec vitesse commutable d'avance et/ou de coupe, et éventuellement au moins un outil de chanfreinage (13) ajustable radialement et
- une unité d'avance (21) agissant sans glissement sur le tube, réglable sur des longueurs prédéterminées des morceaux de tube (34) à tronçonner, en partant de l'extrémité du tube serrée dans la tête de tronçonnage (5).

10. Machine pour tronçonner les tubes selon la revendication 9, caractérisée par une unité d'avance (21) à commande numérique.

11. Machine pour tronçonner les tubes selon la revendication 10, caractérisée par un dispositif de palpage (38) disposé à une distance prédéterminée, dans le sens d'avance, devant la tête de tronçonnage (5), et réagissant au passage de l'extrémité du tube à serrer dans la tête de tronçonnage (5).

12. Machine pour tronçonner les tubes selon une ou plusieurs des revendications 9 à 11, caractérisée par une unité d'avance (21) avec mâchoires de serrage (31) pour le serrage intérieur de l'extrémité du tube.

13. Machine pour tronçonner les tubes selon la revendication 12, caractérisée par un support (26) pour les mâchoires de serrage (31), qui est au moins réglable en hauteur, de préférence réglable de tous côtés, et qui peut être bloqué sur l'unité d'avance (21).

14. Machine pour tronçonner les tubes selon la revendication 13, caractérisée par un dispositif de serrage (46) serrant de manière centrée par rapport au centre de la machine à tronçonner, qui est situé au voisinage de l'extrémité arrière du tube et qui centre le diamètre extérieur du tube par rapport au centre de la machine à tronçonner, de sorte que le support (26) à bloquer peut s'adapter dans tous les sens à un diamètre extérieur du tube éventuellement excentré.

15. Machine pour tronçonner les tubes selon une ou plusieurs des revendications 9 à 14, caractérisée par un banc de machine (2) comportant des organes de guidage longitudinaux (4) et un dispositif d'entraînement (20) pour le support (26) des mâchoires de serrage (31), lequel support est déplaçable sur les organes de guidage (4) au moyen d'un chariot (22), ainsi qu'au moins un rouleau d'appui (36) pour le tube (33), disposé sur le banc de machine (2).

16. Machine pour tronçonner les tubes selon la revendication 15, caractérisée en ce que le (les) rouleau(x) d'appui (36) est (sont) réglable(s) en hauteur en vue d'aligner l'axe du tube (33) qui se trouve dans les rouleaux d'appui (26), en rapport avec le diamètre extérieur réel mesuré sur l'axe de la tête à tronçonner (5).

17. Machine pour tronçonner les tubes selon une ou plusieurs des revendications 9 à 16, caractérisée par une tête de tronçonnage (5) comportant un piston de serrage (6) pouvant coulisser axialement et serrant radialement les mâchoires de serrage (7), ainsi qu'un capteur de course (43), accouplé au piston de serrage (6), pour déterminer le diamètre extérieur réel du tube (33) à partir de la course du piston de serrage (6).

18. Machine pour tronçonner les tubes selon une ou plusieurs des revendications 9 à 16, caractérisée par un capteur de course (45) sur un dispositif de serrage situé sur un dispositif de préhension et d'enlèvement (19) pour la mesure du diamètre extérieur réel du tube (33).

19. Machine pour tronçonner les tubes selon une ou plusieurs des revendications 9 à 18, caractérisée par une unité d'avance (21) comportant un piston de serrage (28) pouvant coulisser axialement et serrant radialement les mâchoires de serrage (31), ainsi qu'un capteur de course (44) accouplé au piston de serrage (28) pour déterminer le diamètre intérieur réel du tube (33) à partir de la course du piston de serrage (6).

20. Machine pour tronçonner les tubes selon une ou plusieurs des revendications 9 à 16, caractérisée par un appareil de mesure de diamètre disposé devant la tête de tronçonnage (5), de préférence un appareil de mesure à laser, qui mesure le diamètre extérieur réel, décalé de la distance par rapport à la zone de tronçonnage, et le transmet à l'unité de commande (41) de la machine à tronçonner.
